# EUROPÄISCHE PATENTANMELDUNG

(11) **EP 0 939 057 A2**
(43) Veröffentlichungstag der Anmeldung: **01.09.1999**
(21) Anmeldenummer: 99102358.1
(22) Anmeldetag: 06.02.1999
(51) Int. Cl.: C02F 11/12

(54) **Verfahren und Anlage zur mechanischen und thermischen Entwässerung von Schlämmen**

(30) Priorität: 26.02.1998 AT 34298
(71) Anmelder: Andritz Patentverwaltungs-Gesellschaft mbH, 8045 Gras (AT)
(72) Erfinder: Maier, Christian, Dipl.-Ing., 8280 Fürstenfeld (AT); Brunnmair, Erwin, Dipl.-Ing., 8045 Graz (AT)
(74) Vertreter: Schweinzer, Friedrich

(57) **Zusammenfassung**

Die Erfindung betrifft ein Verfahren zur mechanischen und thermischen Entwässerung von Schlämmen, insbesondere Industrie- und Klärschlämmen, bei denen der Schlamm vorentwässert und anschließend getrocknet wird. Sie ist vornehmlich dadurch gekennzeichnet, daß der vorentwässerte Schlamm ohne Zwischenstufe in eine granulatähnliche Struktur gebracht und direkt anschließend getrocknet wird. Sie betrifft auch eine Anlage zur Durchführung des Verfahrens mit einem Aggregat zur mechanischen Entwässerung 2 der mit einem direkt daran anschließenden Aufgabeapparat 5 zur Erzeugung einer granulatähnlichen Struktur der fest mit dem Trockner 6, 6' verbunden ist.

## Beschreibung

Die Erfindung betrifft ein Verfahren und eine Anlage zur mechanischen und thermischen Entwässerung von Schlämmen, insbesondere Industrie- und Klärschlämmen, bei denen der Schlamm vorentwässert und anschließend getrocknet wird.

Schlämme mit organischem Anteil über 5% dürfen gemäß den gesetzlichen Bestimmungen ab dem Jahre 2005 nicht mehr deponiert werden. Derzeit werden diese Schlämme, insbesondere Klärschlämme, nach einer mechanischen Entwässerung vermehrt getrocknet und anschließend einer weiteren stofflichen und/oder thermischen Verwertung zugeführt. Insbesondere Klärschlämme durchlaufen während der Trocknung eine Klebephase, die eine aufwendige Rückmischung mit Trägermaterial, vorzugsweise aufbereitetem, bereits getrocknetem Klärschlamm, erforderlich macht. Um dies zu umgehen wird in der DE 43 32 799 A1 (Baumann-Schilp) vorgeschlagen, um eine Zentrifuge herum einen Trocknungsraum vorzusehen. Diese Ausführung ist jedoch schwierig zu warten, sehr aufwendig, und es ist schwer möglich eine gleichmäßige, gewünschte Größe an Granulat zu erzielen. Dadurch erfolgt eine anschließende Trocknung sehr ungleichmäßig, was ein ungleichmäßiges Endprodukt nach sich zieht.

Ziel der Erfindung ist es, ein einfaches und kostengünstiges Verfahren zu schaffen, das Schlamm, insbesondere Klärschlamm, in einer Anlage on-line mechanisch entwässert und trocknet, ohne daß der mechanisch entwässerte Schlamm, bevor dieser in die eigentliche Trocknung aufgegeben wird, mit Trägermaterial rückgemischt werden muß.

Die Erfindung ist daher dadurch gekennzeichnet, daß der vorentwässerte Schlamm ohne Zwischenstufe in eine granulatähnliche Struktur gebracht und direkt anschließend getrocknet wird. Dadurch wird eine einfache und günstige Erzeugung von getrocknetem Klärschlammgranulat mit gleichmäßigen Eigenschaften möglich.

Eine vorteilhafte Weiterbildung der Erfindung ist dadurch gekennzeichnet, daß die Zufuhr der erzeugten Granalien in den Trockner im Bereich hoher Staubkonzentration erfolgt. Dadurch wird erreicht, daß eine gegenseitige Agglomeration der Granalien wirksam durch Anbindung feiner Staubteilchen an deren Oberfläche vermieden wird.

Eine günstige Ausgestaltung der Erfindung ist dadurch gekennzeichnet, daß nach der Entwässerung eine Druckerhöhung der Schlammsuspension erfolgt. Damit wird immer eine gleichmäßige Zufuhr des vorentwässerten Schlammes zum Aufgabeapparat erreicht, wodurch auch die erzeugten Granalien gleichmäßiger werden.

Eine vorteilhafte Weiterbildung der Erfindung ist dadurch gekennzeichnet, daß die mechanische Entwässerung im Zentrifugalfeld erfolgt, wobei die Bewegungsenergie des Materials am Austritt aus dem Zentrifugalfeld für eine Druckerhöhung genutzt werden kann. Dadurch kann eine besonders günstige Vorentwässerung erreicht und der Druck am Eintritt in den nachfolgenden Aufgabeapparat erzeugt werden.

Eine vorteilhafte Ausgestaltung der Erfindung ist dadurch gekennzeichnet, daß der Trockner im ganz oder teilweise geschlossenen Gas-/Luftkreislauf betrieben wird. Durch den im wesentlichen geschlossenen Umluftkreislauf kann der Energieverbrauch wesentlich reduziert werden.

Eine günstige Weiterbildung der Erfindung ist dadurch gekennzeichnet, daß die im Gas-/Luftzirkulationsstrom enthaltenen Feststoffleilchen abgeschieden und vor der Entwässerung dem Frischschlamm zugegeben werden. Dadurch wird die mechanische Entwässerung generell verbessert und der Feinstaubanteil im Naßbereich der Schlammbehandlungsanlage eingebunden. Weiters wird der Feinstaubanteil des getrockneten Schlammes wirksam verringert.

Die Erfindung betrifft auch eine Anlage zur mechanischen und thermischen Entwässerung von Schlämmen, insbesondere Industrie- und Klärschlämmen, mit einem Aggregat zur mechanischen Entwässerung und einem direkt daran anschließenden Aufgabeapparat zur Erzeugung einer granulatähnlichen Struktur der fest mit dem Trockner verbunden ist.

Eine günstige Weiterbildung der Erfindung ist dadurch gekennzeichnet, daß der Aufgabeapparat ganz oder teilweise innerhalb des Trockners vorgesehen ist. So kann der Aufgabepunkt in den Trockner so gewählt werden, daß er im Bereich hoher Staubkonzentration liegt, wodurch eine gegenseitige Agglomeration der Granalien vermieden wird.

Eine günstige Ausgestaltung der Erfindung ist dadurch gekennzeichnet, daß zwischen dem Aggregat zur mechanischen Entwässerung und dem Aufgabeapparat ein Druckerhöhungsaggregat vorgesehen ist. Damit ist eine konstante Förderung und auch ein konstanter Vordruck für die Granulierung gegeben.

Eine vorteilhafte Ausgestaltung der Erfindung ist, dadurch gekennzeichnet, daß die Abluftleitung des Trockners wieder zum Trocknereingang rückgeführt wird, wobei in der Abluftleitung ein Abscheider zur Abscheidung der Feinstoffanteile vorgesehen sein kann, dessen Stoffaustrag mit der Stoffzufuhr zum Aggregat zur mechanischen Entwässerung verbunden ist. Die durch die Kreislaufführung des Gases bzw. der Luft sich ergebende Energieeinsparung wird noch unterstützt durch die verbesserte mechanische Entwässerung durch Einbindung der Feinstaubanteile.

Eine vorteilhafte Weiterbildung der Erfindung ist dadurch gekennzeichnet, daß als mechanisches Entwässerungsaggregat eine Zentrifuge vorge sehen ist, wobei alternativ auch eine Siebbandpresse oder Kammerfilterpresse vorgesehen sein kann.

Eine günstige Ausgestaltung der Erfindung ist dadurch gekennzeichnet, daß als Trockner ein Trommeltrockner vorgesehen ist, wobei auch ein Wirbelschicht-, Fließbett- oder Bandtrockner vorgesehen sein kann.

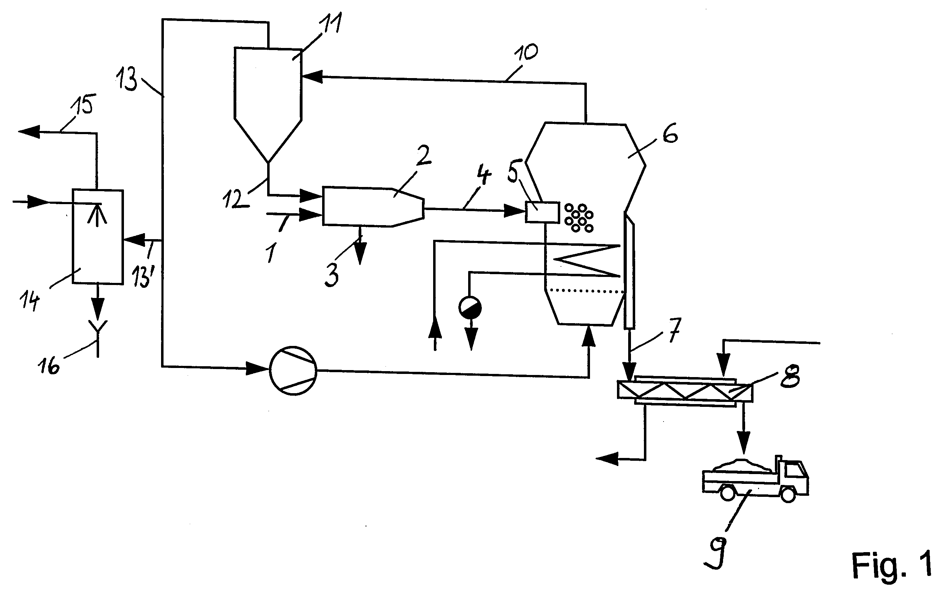

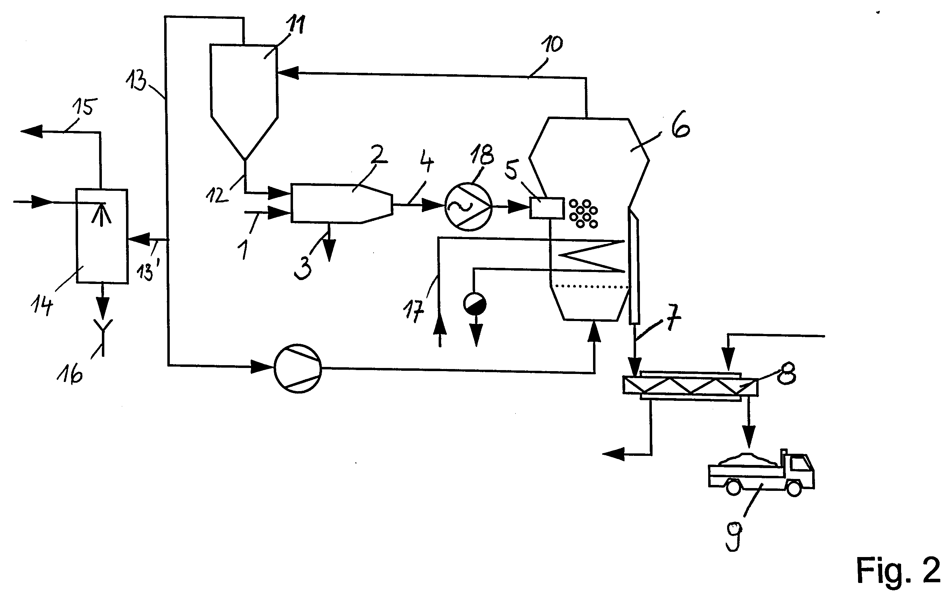

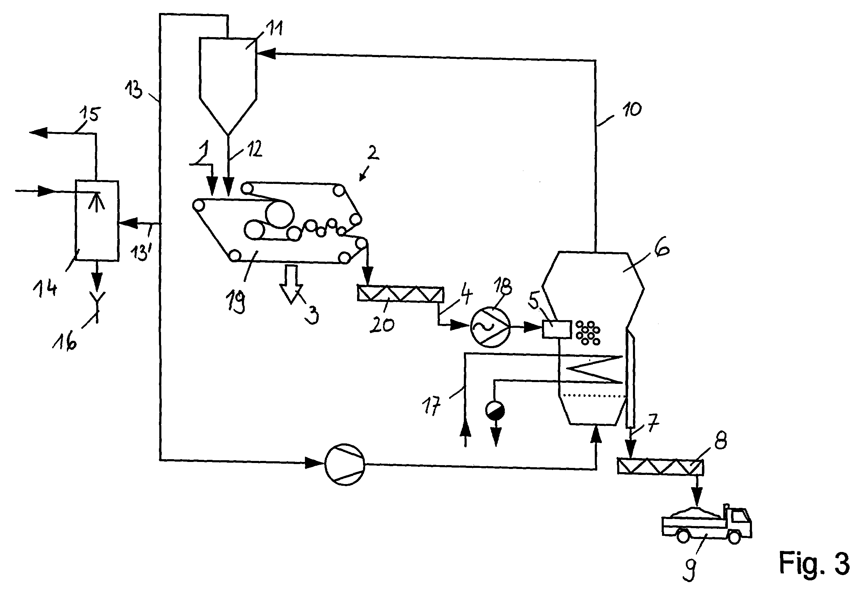

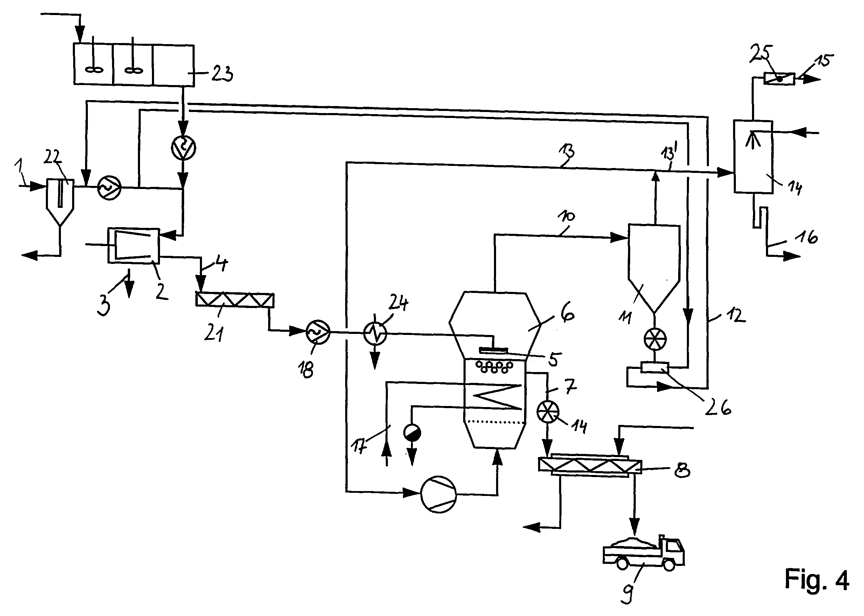

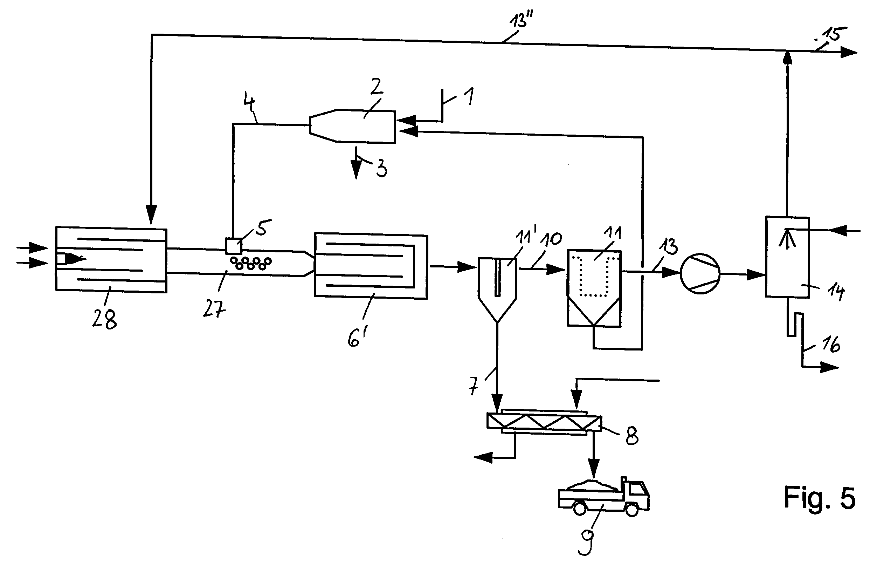

Die Erfindung wird nun im folgenden anhand der Zeichnungen beispielhaft beschrieben, wobei Fig. 1 eine Schlammbehandlungsanlage mit einer Zentrifuge und einem Fließbett-Trockner, Fig. 2 eine analoge Anlage wie Fig. 1 jedoch mit Druckerhöhungspumpe, Fig. 3 eine analoge Anlage wie Fig. 2 jedoch mit Siebbandpresse, Fig. 4 ein Fließbild einer Gesamtanlage und Fig. 5 eine Variante mit Trommeltrockner darstellt.

Fig. 1 zeigt die wichtigsten Elemente einer Schlammbehandlungsanlage gemäß der Erfindung. Der Frisch- oder Dünnschlamm wird über eine Leitung 1 einer Zentrifuge 2, als mechanischem Entwässerungsaggregat, zugeführt. Die abgetrennte Flüssigkeit wird als Filtrat 3 abgeführt. Der eingedickte Schlamm gelangt über Leitung 4 zum Aufgabeapparat 5. Dieser Aufgabeapparat 5, der ein Granulator sein kann, ist im vorliegenden Beispiel in der Wand des Trockners 6 angebracht. Er kann jedoch auch kurz vorher bzw. auch im Inneren des Trockners 6 angeordnet sein. Der Trockner 6 ist als Fließbett-Trockner dargestellt. Das getrocknete und in Form von Granulat vorliegende Produkt wird über Leitung 7 einem gekühlten Schneckenförderer 8 und von dort auf einen LKW 9 zum Abtransport geleitet. Alternativ kann der getrocknete Schlamm auch gemahlen und einer Verbrennung zugeführt werden.

Die Abluft wird über Leitung 10 einem Abscheider 11 zugeführt. Die abgetrennten Feinstoffe und Staub werden über eine Leitung 12 dem zu entwässernden Schlamm vor bzw. am Eintritt der Zentrifuge 2 zugegeben.

Die von Feinstoffen und Staub befreite Abluft wird über Leitung 13 wieder dem Trockner 6 zugeführt, wobei ein Teilstrom über Leitung 13' über einen (Sprüh-) Kondensator 14 als Abgas 15 an die Atmosphäre abgegeben wird. Das Kondensat 16 kann gegebenenfalls zur Aufheizung des Dünnschlammes oder anderer Teile der Anlage verwendet werden. Die Trocknungsluft für den Trockner 6 wird hier mittels Dampf 17 erhitzt.

Fig. 2 ist analog zu Fig. 1, wobei gleiche Teile mit denselben Bezugszeichen versehen sind. Zusätzlich wird hier nach der Zentrifuge 2 in Leitung 4 noch eine Druckerhöhungspumpe 18 vor den Aufgabeapparat 5 eingeschaltet. Damit können Schwankungen des von der Zentrifuge 2 kommenden vorentwässerten Schlammes ausgeglichen und somit immer konstante Bedingungen für den Aufgabeapparat 5 gewährleistet werden.

Fig. 3 zeigt eine weitere Variante der Erfindung, wobei als mechanisches Entwässerungsaggregat eine Siebbandpresse 19 vorgesehen ist. Zur Druckerhöhung ist eine Pumpe 18 einer Förderschnecke 20 nachgeschaltet.

In Fig. 4 ist ein Prozeßfließbild einer Schlammbehandlungsanlage dargestellt. Die gleichen Elemente wurden auch hier mit den gleichen Bezugszeichen versehen. Der mechanischen Entwässerung , hier sinnbildlich als Zentrifuge 2 dargestellt, ist in dieser Ausführungsform eine Siebung, Sichtung oder Sortierung 22 der noch unbehandelten Suspension vorgeschaltet, um Hartstoffe, die größer als 4, vorzugsweise 6 mm, beispielsweise 12 mm sind, abzuscheiden. Dadurch werden die nachfolgenden Aggregate wie mechanische Entwässerungseinrichtung 2, Aufgabevorrichtung 5, Trockner 6 vor Beschädigungen geschützt. Zur Verbesserung der Entwässerung wird aus einem Behälter 23 ein Entwässerungshilfsmittel wie Flockungsmittel zugefügt. Zur mechanischen Entwässerung sind prinzipiell alle bekannten Maschinen und Aggregate wie Siebbandpressen, Kammer- und/oder Membranfilterpressen etc. und insbesondere Zentrifugen geeignet.

Der aus der mechanischen Entwässerungseinrichtung (Zentrifuge 2) anfallende Kuchen wird in eine Fördereinrichtung 21, z. B. Förderschnecke, aufgegeben und dem Trockner 6 mittels einer Pumpe 18, die z.B. als Exzenterschneckenpumpe oder Kolbenpumpe ausgeführt sein kann, zugeführt. In einigen Fällen kann auf die Förderschnecke 21 oder auch auf die Pumpe 18 ganz verzichtet werden. Der Schlamm wird durch die Pumpe 18 einem Aufgabeapparat 5 zugeführt, der z.B. als Granulator ausgebildet ist um den Filterkuchen in Form zu bringen sowie im Trockner 6 verbesserte Trocknungseigenschaften des Schlammes sicherzustellen. Vorteilhaft kann zwischen die Fördereinrichtung 21 bzw. die Pumpe 18 und den Aufgabeapparat 5 eine indirekt wirkende Aufheizstrecke 24 für den Filterkuchen zwischengeschaltet werden um den Kuchen darin bis auf die im Trockner 6 herrschende Temperatur zu bringen. Als Wärmelieferant könnte beispielsweise die im Granulatkühler 8 anfallende Abwärme verwendet werden. Durch die Voraufwärmung des Filterkuchens wird die spezifische Kapazität des Trockners 6 gesteigert, da die Kuchenteilchen nicht erst im Trockner 6 auf Verdampfungstemperatur aufgeheizt werden müssen. Der Filterkuchen wird anschließend in der für die thermische Behandlung und/oder die erwünschte Form des getrockneten Endproduktes günstigsten Form in den Trocknungsraum /die Trocknungszone des Trockners 6 aufgegeben.

Zur Erzielung dieser Form wird eine Aufgabeapparatur 5, z.B. ein Granulator eingesetzt. Diese Aufgabeapparatur kann direkt im Inneren des Trockners 6 (wie dargestellt), in/an der Wand des Trockners oder separat vor dem Trockner angeordnet sein.

Als Trocknungsaggregat ist hier ein Wirbelschichttrockner 6 dargestellt. Hier werden die zu trocknenden Partikel/Granalien mittels des sich im Trocknungsgas-Kreislauf 13 befindlichen Trocknungsgases (z.B. heiße, mit verdampftem Wasser beladene Luft) in Schwebe gehalten. Ein geringer Teilstrom 13' wird aus dem Kreislauf 13 herausgeführt. Mit diesem Teilstrom 13' wird die im Trockner aus dem Filterkuchen verdampfte Flüssigkeitsmenge abgeführt und im Kondensator 14 niedergeschlagen. Die Trägerluft bzw. das Abgas wird über Leitung 15 an die Atmosphäre und das Kondensat über Leitung 16, gegebenenfalls nach einer Wärmeabgabe an den Frischschlamm, z.B. einer Abwasserreinigung abgegeben. Die Abzugmenge wird mittels Regelorgan 25 gesteuert.

Die Wärmezufuhr an das zu trocknende Gut erfolgt im wesentlichen über Dampf 17 mittels eines Wärmetauschers und Wärmeübergang an das Trocknungsgas im Kreislauf 13. Der Hauptstrom des im Trockner 6 behandelten Materials wird über die Schleuse 14 dosiert abgezogen, gekühlt, z.B. in der Kühlfördereinrichtung 8 und zum Abtransport bzw. zur Weiterverwendung bereitgestellt. Die Feinstoffe und Staubpartikel werden mit dem Gasstrom aus dem Trockner 6 ausgetragen und in einem Abscheider 11, der hier in Form eines Zyklons dargestellt ist, aus dem Gasstrom abgeschieden.

Die abgetrennten Feinstoffe und Staub werden im weiteren aus dem Abscheider 11 beispielsweise über eine Zellenradschleuse einer feucht bzw. naß arbeitenden Feststoffrückführeinrichtung 26 zugeführt. Die Feststoffrückführeinrichtung 26 kann als Exzenterschneckenpumpe mit Brückenbrechern/Mischpaddeln ausgebildet sein.

Die Rückspeisung kann vor der mechanischen Entwässerungseinrichtung 2, im Bereich der Kuchenzuführung zum Trockner 6 oder zwischen der Entwässerungseinrichtung 2 und dem Aufgabeapparat 5 erfolgen.

Der Vorteil der feucht oder naß arbeitenden Feststoffrückführeinrichtung liegt darin, daß das Rückführmaterial aus dem Bereich des Abscheiders 11 bereits angeteigt in den Naßstrom rückgeführt werden kann und jegliches Staub- und/oder Einmischproblem in den mechanisch zu entwässernden Schlamm oder den Kuchen vor dem Trockner entfällt. Es kann in den Leitungen auch nichts anbacken oder verkleben, da das angeteigte (oder suspendierte) Rückmaterial in geeigneter Form gepumpt und nicht geblasen oder mit komplizierten mechanischen Einrichtungen gefördert wird.

Fig. 5 stellt eine Variante der erfindungsgemäßen Anlage mit Trommeltrockner 6' dar. Hier ist dem Trockner 6' ein Grobabscheider 11' zur Abscheidung des getrockneten Gutes vorgesehen, das dann über Leitung 7 einer gekühlten Förderschnecke 8 zugeführt wird. Der Feinstoff und Staub wird in einem Abscheider 11 abgeschieden und der Zentrifuge 2 zugeführt. Der aus der Zentrifuge 2 austretende Schlamm wird über Leitung 4 einem Aufgabeapparat 5 zugeleitet, der in der Luftleitung 27 zum Trockner 6' angeordnet ist. Die dort erzeugten Granalien werden in den Luftstrom aufgegeben, wodurch sie an der Oberfläche trocknen und nicht mehr klebrig sind. Der Luftstrom 13 wird hier gesamt über einen Sprühkondensator 14 geführt. Die Umluftleitung 13'' mündet dabei in den Brenner 28, der sie aufheizt und über die Luftleitung 27 dem Trommeltrockner 6' zuführt. An Stelle des Brenners 28 kann auch ein indirekter Wärmetauscher vorgesehen sein.

## Patentansprüche

1. Verfahren zur mechanischen und thermischen Entwässerung von Schlämmen, insbesondere Industrie- und Klärschlämmen, bei denen der Schlamm vorentwässert und anschließend getrocknet wird, dadurch gekennzeichnet, daß der vorentwässerte Schlamm ohne Zwischenstufe in eine granulatähnliche Struktur gebracht und direkt anschließend getrocknet wird.

2. Verfahren nach Anspruch 1, dadurch gekennzeichnet, daß die Zufuhr der erzeugten Granalien in den Trockner im Bereich hoher Staubkonzentration erfolgt.

3. Verfahren nach Anspruch 1 oder 2, dadurch gekennzeichnet, daß nach der Entwässerung eine Druckerhöhung der Schlammsuspension erfolgt.

4. Verfahren nach einem der Ansprüche 1 bis 3, dadurch gekennzeichnet, daß die mechanische Entwässerung im Zentrifugalfeld erfolgt.

5. Verfahren nach Anspruch 4, dadurch gekennzeichnet, daß die Bewegungsenergie des Materials am Austritt aus dem Zentrifugalfeld für eine Druckerhöhung genutzt wird.

6. Verfahren nach einem der Ansprüche 1 bis 5, dadurch gekennzeichnet, daß der Trockner im ganz oder teilweise geschlossenen Gas-/Luftkreislauf betrieben wird.

7. Verfahren nach Anspruch 6, dadurch gekennzeichnet, daß die im Gas-/Luftzirkulationsstrom enthaltenen Feststoflteilchen abgeschieden und vor der Entwässerung dem Frischschlamm zugegeben werden.

8. Anlage zur mechanischen und thermischen Entwässerung von Schlämmen, insbesondere Industrie- und Klärschlämmen, mit einem Aggregat zur mechanischen Entwässerung, dadurch gekennzeichnet, daß dieses Aggregat (2) mit einem direkt daran anschließenden Aufgabeapparat (5) zur Erzeugung einer granulatähnlichen Struktur verbunden ist, der fest mit dem Trockner (6, 6')verbunden ist.

9. Anlage nach Anspruch 8, dadurch gekennzeichnet, daß der Aufgabeapparat innerhalb des Trockners (6) vorgesehen ist.

10. Anlage nach Anspruch 8 oder 9, dadurch gekennzeichnet, daß zwischen dem Aggregat zur mechanischen Entwässerung (2) und dem Aufgabeapparat (5) ein Druckerhöhungsaggregat (18) vorgesehen ist.

11. Anlage nach einem der Ansprüche 8 bis 10, dadurch gekennzeichnet, daß die Abluftleitung (13) des Trockners (6, 6') wieder zum Trocknereingang rückgeführt wird.

12. Anlage nach Anspruch 11, dadurch gekennzeichnet, daß in der Abluftleitung (13) ein Abscheider (11) zur Abscheidung der Feinstoffanteile vorgesehen ist, dessen Stoffaustrag mit dem Eintritt zum Aggregat zur mechanischen Entwässerung (2) verbunden ist.

13. Anlage nach einem der Ansprüche 8 bis 12, dadurch gekennzeichnet, daß als mechanisches Entwässerungsaggregat eine Zentrifuge (2) vorgesehen ist.

14. Anlage nach einem der Ansprüche 8 bis 12, dadurch gekennzeichnet, daß als mechanisches Entwässerungsaggregat eine Siebbandpresse (19) oder Kammerfilterpresse vorgesehen ist.

15. Anlage nach einem der Ansprüche 8 bis 14, dadurch gekennzeichnet, daß als Trockner ein Trommeltrockner (6') vorgesehen ist.

16. Anlage nach einem der Ansprüche 8 bis 14, dadurch gekennzeichnet, daß als Trockner (6) ein Wirbelschicht-, Fließbett- oder Bandtrockner vorgesehen ist.
